# EUROPEAN PATENT APPLICATION

(11) **EP 2 434 737 A1**
(43) Date of publication of application: **28.03.2012**
(21) Application number: 10251630.9
(22) Date of filing: 22.09.2010
(51) Int. Cl.: H04M 3/30

(54) **Testing of telecommunications equipment**

(71) Applicant: British Telecommunications Public Limited Company, London EC1A 7AJ (GB)
(72) Inventor: The designation of the inventor has not yet been filed
(74) Representative: Lidbetter, Timothy Guy Edwin

(57) **Abstract**

A computer 1 is provided with an emulation processor to generate a high volume of simulated data traffic, addressed to a predetermined network address. The emulation programme causes the computer to modify its address routing table so as to open a port 3 to a dummy network address. This address allows the test data to be forwarded to the exchange 7. As the IP address is a dummy IP address, it does not appear in Internet routing tables and so the DSLAM 7 cannot forward the traffic beyond the local exchange 5. Instead, an interception gateway 8 recognises this address as requiring to be diverted to a performance testing platform 9, which measures characteristics such as packet loss rate, to allow analysis to determine the performance of the local loop 4 in isolation, without passing through the rest of the network 6, and without needing to take account of any effects from the rest of the network. Very high volumes of test data can be transmitted, up to the maximum capacity of the local loop 4 and the router 1, so as to determine the behaviour of the local loop and router under such conditions without large amounts of data overloading the rest of the network 6 or causing contention problems for other users.

## Description

This invention relates to the testing of telecommunications equipment, and in particular to the identification of overload conditions in a switching point in the network.

Telecommunications connections are subjected to field tests on installation, and periodically when in service, to confirm their integrity. Such test signals require relatively small bandwidth.

However, it is observed that when large amounts of data are generated by such servers, high packet-loss can occur at the local exchange, despite previous field tests indicating that the connections should have been able to support this type of service. In such circumstances it is desirable to be able to identify whether the problem is in the local loop or deeper in the network. There is therefore a requirement for a method of stress testing a local loop connection by saturating it with large amounts of data, whilst isolating the local loop from the rest of the network, in order to determine the location of the problem.

According to the invention, there is provided a method of testing a telecommunications connection between a customer premises and a local switching system by using a test device, the method comprising the steps of:
a) using an emulation processor on the test device to control the test device such that a port on the test device is mapped to a dummy device destination address at a dummy destination node address;
b) using the emulation processor on the test device to generate test data and transmit said test data to said dummy device destination address through said port;
c) using the local switching system to intercept said test data such that the data routing is terminated at the exchange, and the test data is forwarded to a data analysis processor, arranged to detect one or more characteristics of said intercepted data.

Thus, the invention enables test traffic to be sent just over the local loop connection between the customer premises equipment and the Digital Subscriber Line Access Multiplexer (DSLAM) at the local switch (exchange), without requiring large amounts of data to be sent over the wider network.

Packet failures not picked up by the customer premises equipment (CPE) can be viewed by a field technician using a portable computer to generate traffic which overloads and stresses the capacity of local loop. The computer's routing table is modified to enable data to be generated and sent out over the local line, which is then terminated at the local exchange. By modifying the routing table to generate a dummy internet address recognisable by the exchange, the quantity of data generated by the performance testing program can be increased to a level sufficient to stress test the local loop.

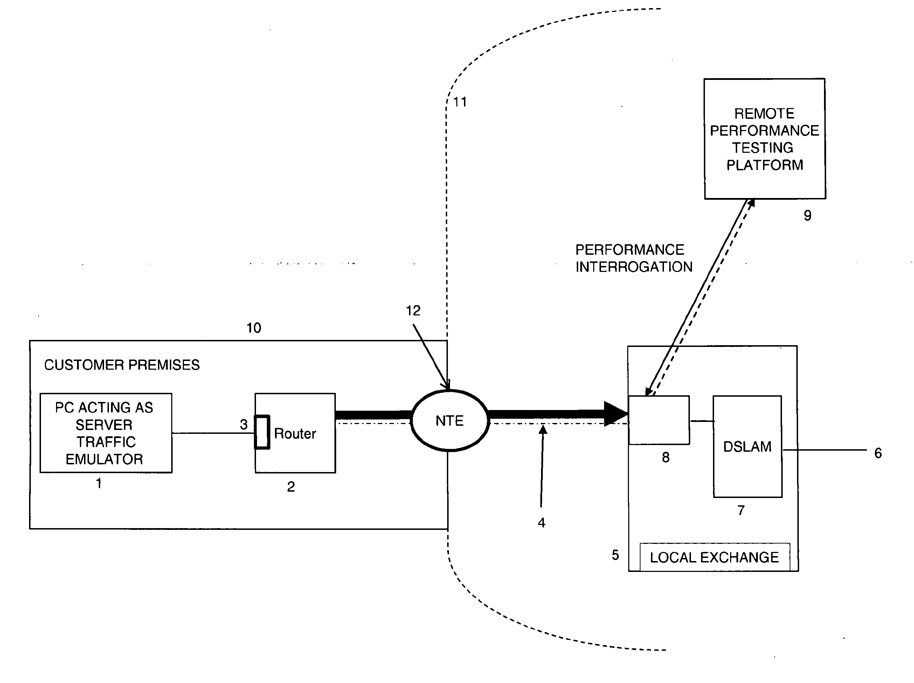

An embodiment of the invention will now be described, by way of example, with reference to the Figure, which depicts the various elements which co-operate to perform the invention, together with the information flows which take place between them.

The customer premises 10 is connected to the public network 11 at a network termination 12, from which a "local loop" connection 4 connects it to the local exchange 5. Within the exchange 5 a Digital Subscriber Line Access Multiplexer (DSLAM) 7 provides the necessary connections to enable connection between the local loop 4 and the rest of the telecommunications network 6. The DSLAM 7 provides a number of ports to enable different services and connections to be provided using the same physical connection 4, for example a digital connection over the internet, an ordinary circuit-switched voice connection, etc.

According to the invention an additional gateway 8 is provided to intercept incoming data traffic and divert traffic having a predetermined destination address to a separate performance testing platform 9 associated with the exchange 5, instead of to the DSLAM 7. This allows the test procedures to be performed without overloading the main network 6. The performance testing platform 9 may be co-located with the exchange, but preferably it is linked to the exchange by a dedicated connection independent of the public network 6, allowing it to serve several exchanges.

The customer premises equipment comprises a router or wireless hub 2 which incorporates a modem and one or more ports 3, the or each port allowing connection of a user terminal so as to communicate with the internet 6 through the local loop 4, or to allow user terminals to communicate with each other.

In order to perform the method of the invention, a computer 1 or other device is provided with an emulation processor to generate a high volume of simulated data traffic, addressed to a predetermined network address. This computer 1 may be a terminal operated by a field technician who has been granted temporary access to the user's router 2 for the purpose of performing the test, or it may be a terminal belonging to the customer on whose premises the test is to take place. In the latter case, the emulation processor program may be downloaded to a digital storage medium on the user device from another digital storage medium such as a field technician's computer, a machine- readable carrier, or remotely over the internet 6. The program may be arranged to operate for a predetermined period or at predetermined times of day corresponding to the times of day when problems have been reported. The programme may be set to run indefinitely, or to cease operating and uninstall itself after the required tests have been completed.

The test data may be in any form suitable for analysis at the receiving end to determine the capabilities of the links over which it is carried. Preferably the data rate is variable, so that the performance of the data link under test may be tested at different loadings, and so that the maximum capacity may be determined for which acceptable performance is achievable. Alternatively the data rate may be set to a predetermined data rate at which packet loss has been recorded, thus allowing the local loop to be identified or eliminated as the cause of such packet loss.

The computer 1 is connected to the router 2 and the emulation programme causes the computer to modifying its address routing table so as to open a port 3 to a dummy MAC/IP address. The router 2 recognises this as a network address and forwards the test data to the DSLAM.

The dummy address is programmed into the interception gateway 8 associated with the DSLAM 7. The ARP table, (address resolution protocol) which controls routing in the DSLAM arranges for the modified data to be transmitted, despite no real destination actually existing. As the IP address is a dummy IP address, it does not appear in Internet routing tables and so the DSLAM 7 cannot forward the traffic beyond the local exchange 5. Instead, the interception gateway 8 recognises this address as requiring special handling, and instead of routing the data into the Internet 6, as it would for a normal address, the test data is diverted to the performance testing platform 9.

The performance testing platform intercepts the traffic and measures characteristics such as packet loss rate. The data can then be analysed to determine the performance of the local loop 4 in isolation, without passing through the rest of the network 6. This allows the local loop 4 to be analysed without needing to take account of any effects from the rest of the network. Very high volumes of test data can be transmitted, up to the maximum capacity of the local loop 4 and the router 1, so as to determine the behaviour of the local loop and router under such conditions without large amounts of data overloading the rest of the network 6 or causing contention problems for other users.

Once initial contact has been established between the user terminal 1 and the testing platform 9, test traffic can also be passed between the performance testing platform 9 and the traffic emulator 1 in the reverse direction by way of the gateway 8, again without involvement of the DSLAM. The user terminal 1 is configured to perform similar measurements to those on the forward stream made by the performance testing platform, and to report the results to the performance testing platform. This allows testing of the connection in the reverse direction, which is particularly significant for connections in which the data flows are highly asymmetric. For example, in many domestic situations the amount of data sent from the user to the network is several orders of magnitude less than the data received by the user - for example a request for a streamed video as compared with the streamed video that is returned in response to that request - and it is the downstream path which is the more likely to suffer capacity or contention problems.

As the traffic is intercepted before normal processing by the DSLAM it is not counted towards any usage restrictions applied to the user's account.

As the process is operated within the user premises and the DSLAM, the invention operates in the same way independently of the nature of the local loop 4. In the Figure, the connection 4 is depicted as a wired connection, but the process is equally applicable to analysing the performance of optical or wireless connections.

## Claims

1. A method of testing a telecommunications connection between a customer premises and a local switching system by using a test device, the method comprising the steps of:
a) using an emulation processor on the test device to control the test device such that a port on the test device is mapped to a dummy device destination address at a dummy destination node address;
b) using the emulation processor on the test device to generate test data and transmit said test data to said dummy device destination address through said port;
c) using the local switching system to intercept said test data such that the data routing is terminated at the exchange, and the test data is forwarded to a data analysis processor, arranged to detect one or more characteristics of said intercepted data.

2. A method as claimed in claim 1, wherein the test device is provided with an emulation programme to generate a high volume of simulated data traffic

3. A method according to claim 2, wherein the emulation programme generates test data capable of occupying 100% of the bandwidth of the tested connection.

4. A method according to claim 1, claim 2 or claim 3, wherein the test device operates a modified routing table to generate a dummy internet address recognisable by the exchange, and wherein the exchange diverts data having the dummy address to a performance testing processor

5. A method according to claim 4, wherein an address resolution protocol for controlling routing in the exchange is configured to accept data having the dummy address and to divert it to the performance testing platform and not to the network.

6. A method according to claim 4 or 5, wherein the performance testing processor is linked to the exchange by a dedicated connection independent of the public network.

7. A method according to claim 6, wherein the performance testing processor has dedicated links to a plurality of exchanges.

8. A method according to claim 4, claim 5, claim 6 or claim 7, wherein the performance management platform generates test traffic for transmission to the test device.

9. A method according to claim 8, wherein the test device detects one or more characteristics of the test traffic transmitted to it by the performance test processor to generate a test measure, and transmits the test measure to the performance testing processor.
